# EUROPÄISCHE PATENTSCHRIFT

(11) **EP 0 794 204 B1**
(45) Veröffentlichungstag und Bekanntmachung des Hinweises auf die Patenterteilung: **26.01.2005**
(21) Anmeldenummer: 97103004.4
(22) Anmeldetag: 25.02.1997
(51) Int. Cl.: C08G 18/83, C08G 18/08, C09D 175/14, C09J 175/14

(54) **Latent vernetzende wässerige Polyurethandispersionen**
Latently crosslinking aqueous polyurethane dispersions
Dispersions aqueuses de polyuréthane aptes à la réticulation latente

(30) Priorität: 06.03.1996 DE 19608610
(43) Veröffentlichungstag der Anmeldung: 10.09.1997
(73) Patentinhaber: BASF AKTIENGESELLSCHAFT, 67056 Ludwigshafen (DE)
(72) Erfinder: Licht, Ulrike, Dr., 68163 Mannheim (DE); Kokel, Nicolas, Dr., 67069 Ludwigshafen (DE); Häberle, Karl, Dr., 67346 Speyer (DE); Wüstefeld, Renate, Dr., 67105 Schifferstadt (DE)

(56) Entgegenhaltungen:
- EP-A- 0 184 302
- EP-A- 0 787 751
- DE-A- 3 540 464
- US-A- 5 306 764

## Beschreibung

Die vorliegende Erfindung betrifft latent vernetzende wässerige Polyurethandispersionen, enthaltend
I) eine disperse Phase (P.I), enthaltend
   Ia) ein Polyurethan (PUR.Ia), das neben Gruppen, die die Wasserdispergierbarkeit des Polyurethans bewirken, Gruppen mit einer C-C-Doppelbindung, in denen die Doppelbindung durch eine daran direkt gebundene Carbonylgruppe aktiviert ist, trägt oder
   Ib) eine Mischung aus
      - einem Polyurethan (PUR.Ib), das Gruppen, die die Wasserdispergierbarkeit des Polyurethans bewirken, jedoch keine Gruppen mit einer C-C-Doppelbindung, in denen die Doppelbindung durch eine daran direkt gebundene Carbonylgruppe aktiviert ist, trägt und
      - einer Verbindung (V.I) verschieden von den Polyurethanen PUR.Ia und PUR.Ib, die Gruppen mit einer C-C-Doppelbindung, in denen die Doppelbindung durch eine daran direkt gebundene Carbonylgruppe aktiviert ist, trägt und
II) eine disperse Phase (P.II), enthaltend eine Verbindung verschieden von den Verbindungen (PUR.Ia), (PUR.Ib) und (V.I), die mehrere Gruppen, ausgewählt aus der Gruppe der Thiolgruppen, primären Aminogruppen oder sekundären Aminogruppen, trägt.

Weiterhin betrifft die Erfindung deren Verwendung als Beschichtungsmittel oder Klebstoff.

Wässerige Dispersionen, die in dispergierter Form ein Polyurethan enthalten, sind allgemein bekannt. Damit Beschichtungen, die aus dem Polyurethan hergestellt werden, besonders gute mechanische Eigenschaften, setzt man diesen Dispersionen einen Vernetzerkomponente zu. Dabei ist es besonders erwünscht, daß der Vernetzer den Molekulargewichtsaufbau des Polyurethans erst bewirkt, wenn die Polyurethandispersion nach dem Auftrag auf das zu beschichtende Werkstück bereits verfilmt ist. Unter diesen Umständen erhält man Filme, die eine besonders hohe kohäsion aufweisen, da dann auch die Polymermoleküle eines Dispersionsteilchens mit den Polymermolekülen eines anderen benachbarten Dispersionsteilchen über eine kovalente Bindung verknüpft sein können.

Eine besonders gute Kohäsion der Filme ist beispielsweise auf dem Klebstoffgebiet besonders dann erforderlich, wenn der Klebeverbund unter Einwirkung von Wärme mechanisch belastet wird.

Um Klebeverbunde zu erhalten, die auch unter diesen Bedingungen noch eine ausreichende Festigkeit aufweisen, wurde z. B. in der EP-A-206059 empfohlen, den Dispersionen kurze Zeit vor deren Verarbeitung als Klebstoff als Vernetzer ein wasseremulgierbares Polyisocyanat zuzusetzen.

Der Nachteil an diesen Zweikomponenten-Systemen besteht jedoch darin, daß die Topfzeit, d.h. der Zeitraum, in dem diese Systeme nach ihrer Vermischung verarbeitet werden können, eng begrenzt ist. Da das Zweikomponenten-System nicht über einen längeren Zeitraum hinweg lagerbar ist und der Verarbeiter sich ein bestimmte Klebstoffmenge, die er innerhalb eines Arbeitszyklus verarbeiten kann, extra herstellen muß, ist der Arbeitsaufwand für den Verarbeiter der Klebstoffe bei Zweikomponenten-Systemen gegenüber Einkomponenten-Systemen erhöht.

Über einen längeren Zeitraum hinweg lagerbare, latent härtende Dispersionen, d.h. solche Dispersionen, die zwar den Härter enthalten, wobei aber der Härter erst nach der Verarbeitung der Dispersionen vollständig wirksam wird, sind beispielsweise aus der EP-A-442 652 bekannt. Die Dispersionen enthalten beispielsweise ein Polyurethan mit einer Carbonylgruppe in Aldehyd- oder Ketofunktion und Adipinsäuredihydrazid als Vernetzungsmittel. Diese Dispersionen jedoch im Hinblick auf Festigkeit bei erhöhter Temperatur verbesserungsbedürftig.

Aus der EP-A-443 537 sind wässerige Dispersionen aus Polyurethanen bekannt, die Acryloylgruppen tragen. Es wird empfohlen, diese Dispersionen zur Folienkaschierung zu verwenden. Dabei werden die Dispersion auf eine Folie aufgetragen, die Folie auf ein anderes Substrat geklebt und der Klebstoff durch Bestrahlung mit UV-Licht ausgehärtet.

Weiterhin sind Polyurethandispersionen mit Acryloylgruppen aus der EP-A-443 537, 183 119, 181 486, 189 945 und 353 797 sowie der US-A-5 306 764 bekannt.

Aus der EP-A-601 764 sind Polyurethandispersionen bekannt, die primäre und/oder sekundäre Aminogruppen tragen. Diese Dispersionen werden hergestellt, indem man ein Präpolymer mit Isocyanatgruppen in Wasser dispergiert und der wässerigen Dispersion ein Polyamin mit wenigstens 2 primären Aminogruppen und wenigstens einer sekundären Aminogruppe zusetzt. Nach der dortigen Lehre lassen sich diese Dispersionen mit einem Epoxidharz, einem Melaminharz oder einem blockierten Polyisocyanat vernetzen.

Die Aufgabe der vorliegenden Erfindung bestand daher darin, eine weitere latent härtende wässerige Polyurethandispersion zur Verfügung zu stellen, die die Nachteile des Standes der Technik nicht aufweist und insbesondere eine gute Lagerstabilität aufweist und mit denen sich wärmefeste Verklebungen herstellen lassen.

Demgemäß wurden die eingangs definierten wässerigen Dispersionen gefunden.

Die disperse Phase (P.Ia) enthält üblicherweise 0,05 bis 3, bevorzugt 0,2 bis 1 mol/kg Gruppen mit einer C-C-Doppelbindung, in denen die Doppelbindung durch eine daran direkt gebundene Carbonylgruppe aktiviert ist.

Die Phase (P.I) enthält bevorzugt oder besteht besonders bevorzugt aus einem Polyurethan (PUR.Ia), aufgebaut aus
a1) mehrwertigen Isocyanaten mit 4 bis 30 C-Atomen,
a2) Polyolen, von denen
   a2.1) 10 bis 100 mol-%, bezogen auf die Gesamtmenge der Polyole (a2), ein Molekulargewicht von 500 bis 5000 aufweisen, und
   a2.2) 0 bis 90 mol-%, bezogen auf die Gesamtmenge der Polyole (a2), ein Molekulargewicht von 60 bis 50 g/mol aufweisen,
a3) von den Monomeren (a1) und (a2) verschiedene Monomere mit wenigstens einer Isocyanatgruppe oder wenigstens einer gegenüber Isocyanatgruppen reaktiven Gruppe, die darüberhinaus wenigstens eine hydrophile Gruppen oder eine potentiell hydrophile Gruppe tragen, wodurch die Wasserdispergierbarkeit der Polyurethane bewirkt wird,
a4) von den Monomeren (a1), (a2) und (a3) verschiedene Monomere mit wenigstens einer Isocyanatgruppe oder wenigstens einer gegenüber Isocyanatgruppen reaktiven Gruppe, die darüberhinaus wenigstens eine Gruppe mit einer C-C-Doppelbindung, in denen die Doppelbindung durch eine daran direkt gebundene Carbonylgruppe aktiviert ist, tragen,
a5) gegebenenfalls weiteren von den Monomeren (a2) bis (a4) verschiedenen mehrwertigen Verbindungen mit gegenüber Isocyanatgruppen reaktiven Gruppen, bei denen es sich um alkoholische Hydroxylgruppen oder primäre oder sekundäre Aminogruppen handelt.

Als Monomere (a1) kommen die üblicherweise in der Polyurethanchemie eingesetzten Polyisocyanate in Betracht.

Insbesondere zu nennen sind Diisocyanate X(NCO)₂, wobei X für einen aliphatischen Kohlenwasserstoffrest mit 4 bis 12 Kohlenstoffatomen, einen cycloaliphatischen oder aromatischen Kohlenwasserstoffrest mit 6 bis 15 Kohlenstoffatomen oder einen araliphatischen Kohlenwasserstoffrest mit 7 bis 15 Kohlenstoffatomen steht. Beispiele derartiger Diisocyanate sind Tetramethylendiisocyanat, Hexamethylendiisocyanat, Dodecamethylendiisocyanat, 1,4-Diisocyanatocyclohexan, 1-Isocyanato-3,5,5-trimethyl-5-isocyanatomethylcyclohexan (IPDI), 2,2-Bis-(4-isocyanatocyclohexyl)-propan, Trimethylhexandiisocyanat, 1,4-Diisocyanatobenzol, 2,4'-Diisocyanatotoluol, 2,6-Diisocyanatotoluol, 4,4'-Diisocyanato-diphenylmethan, 2,4-Diisocyanato-diphenylmethan, p-xylylendiisocyanat, die Isomeren des Bis-(4-isocyanatocyclohexyl)methan wie das trans/trans-, das cis/cis- und das cis/trans-Isomere sowie aus diesen Verbindungen bestehende Gemische.

Als Gemische dieser Isocyanate sind besonders die Mischungen der jeweiligen Strukturisomeren von Diisocyanatotoluol und Diisocyanato-diphenylmethan von Bedeutung, insbesondere die Mischung aus 80 mol-% 2,4 Diisocyanatotoluol und 20 mol-% 2,6-Diisocyanatotoluol geeignet. Weiterhin sind die Mischungen von aromatischen Isocyanaten wie 2,4 Diisocyanatotoluol und/oder 2,6-Diisocyanatotoluol mit aliphatischen oder cycloaliphatischen Isocyanaten wie Hexamethylendiisocyanat oder IPDI besonders vorteilhaft, wobei das bevorzugte Mischungsverhältnis der aliphatischen zu aromatischen Isocyanate 4 : 1 bis 1 : 4 beträgt.

Als Verbindungen (a1) kann man auch Isocyanate einsetzen, die neben den freien Isocyanatgruppen weitere verkappte Isocyanatgruppen, z.B. Uretdion- oder Carbodiimidgruppen tragen.

Gegebenenfalls können auch solche Isocyanate mitverwendet werden, die nur eine Isocyanatgruppe tragen. Im allgemeinen beträgt ihr Anteil maximal 10 mol-%, bezogen auf die gesamte Molmenge der Monomere. Die Monoisocyanate tragen üblicherweise weitere funktionelle Gruppen wie olefinische Gruppen oder Carbonylgruppen und dienen zur Einführung von funktionellen Gruppen in das Polyurethan, die die Dispergierung bzw. die Vernetzung oder weitere polymeranaloge Umsetzung des Polyurethans ermöglichen. In Betracht kommen hierfür Monomere wie Isopropenyl-α,α-zylisocyanat (TMI).

Um Polyurethane mit einem gewissen Verzweigungs- oder Vernetzungsgrad herzustellen, können z.B. dreiwertige und vierwertige Isocyante eingesetzt werden. Derartige Isocyanate werden z.B. erhalten, indem man zweiwertige Isocyanate miteinander umsetzt, indem man einen Teil ihrer Isocyanatgruppen zu Allophanat- oder Isocyanurat-Gruppen derivatisiert. Handelsübliche Verbindungen sind beispielsweise das Isocyanurat oder das Biuret des Hexamethylendiisocyanats.

Im Hinblick auf gute Filmbildung und Elastizität kommen als Polyole (a2) vornehmlich höhermolekulare Polyole (a2.1), bevorzugt Diole in Betracht, die ein Molekulargewicht von etwa 500 bis 5000, vorzugsweise von etwa 100 bis 3000 g/mol haben.

Bei den Diolen (a2.1) handelt es sich insbesondere um Polyesterpolyole, die z.B. aus Ullmanns Encyklopädie der technischen Chemie, 4. Auflage, Band 19, S. 62 bis 65 bekannt sind. Bevorzugt werden Polyesterpolyole eingesetzt, die durch Umsetzung von zweiwertigen Alkoholen mit zweiwertigen Carbonsäuren erhalten werden. Anstelle der freien Polycarbonsäuren können auch die entsprechenden Polycarbonsäureanhydride oder entsprechende Polycarbonsäureester von niederen Alkoholen oder deren Gemische zur Herstellung der Polyesterpolyole verwendet werden. Die Polycarbonsäuren können aliphatisch, cycloaliphatisch, araliphatisch, aromatisch oder heterocyclisch sein und gegebenenfalls, z.B. durch Halogenatome, substituiert und/oder ungesättigt sein. Als Beispiele hierfür seien genannt: Korksäure, Azelainsäure, Phthalsäure, Isophthalsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimere Fettsäuren. Bevorzugt sind Dicarbonsäuren der allgemeinen Formel HOOC-(CH₂)_{y}-COOH, wobei y eine Zahl von 1 bis 20, bevorzugt eine gerade Zahl von 2 bis 20 ist, z.B. Bernsteinsäure, Adipinsäure, Dodecandicarbonsäure und Sebacinsäure.

Als mehrwertige Alkohole kommen z.B. Ethylenglykol, Propan-1,2-diol, Propan-1,3-diol, Butan-1,3-diol, Buten-1,4-diol, Butin-1,4-diol, Pentan-1,5-diol, Neopentylglykol, Bis-(hydroxymethyl)-cyclohexane wie 1,4-Bis-(hydroxymethyl)cyclohexan, 2-Methyl-propan-1,3-diol, Methylpentandiole, ferner Diethylenglykol, Triethylenglykol, Tetraethylenglykol, Polyethylenglykol, Dipropylenglykol, Polypropylenglykol, Dibutylenglykol und Polybutylenglykole in Betracht. Bevorzugt sind Alkohole der allgemeinen Formel HO-(CH₂)ₓ-OH, wobei x eine Zahl von 1 bis 20, bevorzugt eine gerade Zahl von 2 bis 20 ist. Beispiele hierfür sind Ethylenglycol, Butan-1,4-diol, Hexan-1,6-diol, Octan-1,8-diol und Dodecan-1,12- diol.

Ferner kommen auch Polycarbonat-Diole, wie sie z.B. durch Umsetzung von Phosgen mit einem Überschuß von den als Aufbaukomponenten für die Polyesterpolyole genannten niedermolekularen Alkohole erhalten werden können, in Betracht.

Geeignet sind auch Polyesterdiole auf Lacton-Basis, wobei es sich um Homo- oder Mischpolymerisate von Lactonen, bevorzugt um endständige Hydroxylgruppen aufweisende Anlagerungsprodukte von Lactonen an geeignete difunktionelle Startermoleküle handelt. Als Lactone kommen bevorzugt solche in Betracht, die sich von Verbindungen der allgemeinen Formel HO-(CH₂)_{z}-COOH ableiten, wobei z eine Zahl von 1 bis 20 ist. Beispiele sind ε-Caprolacton, B-Propiolacton, gamma-Butyrolacton und/oder Methyl-ε-caprolacton sowie deren Gemische. Geeignete Starterkomponenten sind z.B. die vorstehend als Aufbaukomponente für die Polyesterpolyole genannten niedermolekularen zweiwertigen Alkohole. Die entsprechenden Polymerisate des epsilon-Caprolactons sind besonders bevorzugt. Auch niedere Polyesterdiole oder Polyetherdiole können als Starter zur Herstellung der Lacton-Polymerisate eingesetzt sein. Anstelle der Polymerisate von Lactonen können auch die entsprechenden, chemisch äquivalenten Polykondensate der den Lactonen entsprechenden Hydroxycarbonsäuren, eingesetzt werden.

Daneben kommen als Monomere (a2.1) Polyetherdiole in Betracht. Sie sind insbesondere durch Polymerisation von Ethylenoxid, Propylenoxid, Butylenoxid, Tetrahydrofuran, Styroloxid oder Epichlorhydrin mit sich selbst, z.B. in Gegenwart von BF₃ oder durch Anlagerung dieser Verbindungen gegebenenfalls im Gemisch oder nacheinander, an Startkomponenten mit reaktionsfähigen Wasserstoffatomen, wie Alkohole oder Amine, z.B. Wasser, Ethylenglykol, Propan-1,2-diol, Propan-1,3-diol, 1,2-Bis(4-hydroxydiphenyl)-propan oder Anilin erhältlich. Besonders bevorzugt ist Polytetrahydrofuran eines Molekulargewichts von 240 bis 5000, und vor allem 500 bis 4500.

Ebenfalls geeignet sind Polyhydroxyolefine, bevorzugt solche mit 2 endständigen Hydroxylgruppen, z.B. α-Ω-Dihydroxypolybutadien, α-Ω-Dihydroxypolymethacrylester oder α-Ω-DihydroxyPolyacrylester als Monomere (a2.1). Solche Verbindungen sind beispielsweise aus er EP-A-0 622 378 bekannt. Weitere geeignete Polyole sind Polyacetale, Polysiloxane und Alkydharze.

Die Polyole können auch als Gemische im Verhältnis 0,1 : 1 bis 1 : 9 eingesetzt werden.

Die Härte und der Elastizitätsmodul der Polyurethane läßt sich erhöhen, wenn als Diole (a2) neben den Diolen (a2.1) noch niedermolekulare Diole (a2.2) mit einem Molekulargewicht von etwa 62 bis 500, vorzugsweise von 62 bis 200 g/mol, eingesetzt werden. Als Monomere (a2.2) werden vor allem die Aufbaukomponenten der für die Herstellung von Polyesterpolyolen genannten kurzkettigen Alkandiole eingesetzt, wobei die unverzweigten Diole mit 2 bis 12C-Atomen und einer gradzahligen Anzahl von C-Atomen bevorzugt werden.

Bevorzugt beträgt der Anteil der Diole (a2.1), bezogen auf die Gesamtmenge der der Diolen (a2) 10 bis 100 mol-% und der Anteil der Monomere (a2.2), bezogen auf die Gesamtmenge der der Diolen (a2) 0 bis 90 mol-%. eingesetzt. Besonders bevorzugt beträgt das Verhältnis der Diole (a2.1) zu den Monomeren (a2.2) 0,2 : 1 bis 5 : 1, besonders bevorzugt 0,5 : 1 bis 2 : 1.

Um die Wasserdispergierbarkeit der Polyurethane zu erreichen, sind die Polyurethane neben den Komponenten (a1) und (a2) aus von den Komponenten (a1) und (a2) verschiedenen Monomeren (a3), die wenigstens eine Isocyanatgruppe oder wenigstens eine gegenüber Isocyanatgruppen reaktive Gruppe und darüberhinaus wenigstens eine hydrophile Gruppe oder eine Gruppe, die sich in hydrophile Gruppen überführen läßt, tragen, aufgebaut. Im folgenden Text wird der Begriff "hydrophile Gruppen oder potentiell hydrophile Gruppen" mit "(potentiell) hydrophile Gruppen" abgekürzt. Die (potentiell) hydrophilen Gruppen reagieren mit Isocyanaten wesentlich langsamer, als die funktionellen Gruppen der Monomere, die zum Aufbau der Polymerhauptkette dienen.

Der Anteil der Komponenten mit (potentiell) hydrophilen Gruppen an der Gesamtmenge der Komponenten (a1) bis (a5) wird im allgemeinen so bemessen, daß die Molmenge der (potentiell) hydrophilen Gruppen, bezogen auf die Gewichtsmenge aller Monomere (a1) bis (a5), 0,03 bis 1, bevorzugt 0,05 bis 0,5 und besonders bevorzugt 0,08 bis 0,3 mol/kg beträgt.

Bei den (potentiell) hydrophilen Gruppen kann es sich um nichtionische oder bevorzugt um (potentiell) ionische hydrophile Gruppen handeln.

Als nichtionische hydrophile Gruppen kommen insbesondere Polyethylenglycolether aus vorzugsweise 5 bis 100, bevorzugt 10 bis 80 Ethylenoxid-Wiederholungseinheiten, in Betracht. Der Gehalt an Polyethylenoxid-Einheiten beträgt im allgemeinen 0 bis 10, bevorzugt 0 bis 6 Gew.-%, bezogen auf die Gewichtsmenge aller Monomere (a1) bis (a5).

Bevorzugte Monomere mit nichtionischen hydrophilen Gruppen sind das Polyethylenglykol und Diisocyanate, die eine endständig veretherten Polyethylenglykolrest tragen. Derartige Diisocyanate sowie Verfahren zu deren Herstellung sind in den Patentschriften US 3 905 929 und US 3 920 598 angegeben.

Ionische hydrophile Gruppen sind vor allem anionische Gruppen wie die Sulfonat-, die Carboxylat- und die Phosphatgruppe in Form ihrer Alkalimetall- oder Ammoniumsalze sowie kationische Gruppen wie Ammonium-Gruppen, insbesondere protonierte tertiäre Aminogruppen oder quartäre Ammoniumgruppen.

Potentiell ionische hydrophile Gruppen sind vor allem solche, die sich durch einfache Neutralisations-, Hydrolyse- oder Quaternisierungsreaktionen in die oben genannten ionischen hydrophilen Gruppen überführen lassen, also z.B. Carbonsäuregruppen, Anhydridgruppen oder tertiäre Aminogruppen.

(Potentiell) ionische Monomere (a3) sind z.B. in Ullmanns Encyklopädie der technischen Chemie, 4. Auflage, Band 19, S. 311-313 und beispielsweise in der DE-A 1 495 745 ausführlich beschrieben.

Als (potentiell) kationische Monomere (a3) sind vor allem Monomere mit tertiären Aminogruppen von besonderer praktischer Bedeutung, beispielsweise: Tris-(hydroxyalkyl)-amine, N,N'-Bis(hydroxyalkyl)-alkylamine, N-Hydroxyalkyl-dialkylamine, Tris-(aminoalkyl)-amine, N,N'-Bis(aminoalkyl)-alkylamine, N-Aminoalkyl-dialkylamine, wobei die Alkylreste und Alkandiyl-Einheiten dieser tertiären Amine unabhängig voneinander aus 2 bis 6 Kohlenstoffatomen bestehen. Weiterhin kommen tertiäre Stickstoffatome aufweisende Polyether mit vorzugsweise zwei endständigen Hydroxylgruppen, wie sie z.B. durch Alkoxylierung von zwei an Aminstickstoff gebundene Wasserstoffatome aufweisende Amine, z.B. Methylamin, Anilin, oder N,N'-Dimethylhydrazin, in an sich üblicher Weise zugänglich sind, in Betracht. Derartige Polyether weisen im allgemeinen ein zwischen 500 und 6000 g/mol liegendes _{M}olgewicht auf.

Diese tertiären Amine werden entweder mit Säuren, bevorzugt starken Mineralsäuren wie Phosphorsäure, Schwefelsäure oder Halogenwasserstoffsäuren oder starken organischen Säuren oder durch Umsetzung mit geeigneten Quaternisierungsmitteln wie C₁- bis C₆-Alkylhalogeniden, z.B. Bromiden oder Chloriden in die Ammoniumsalze überführt.

Als Monomere mit (potentiell) anionischen Gruppen werden üblicherweise aliphatische, cycloaliphatische, araliphatische oder aromatische Carbonsäuren und Sulfonsäuren in Betracht, die mindestens eine alkoholische Hydroxylgruppe oder mindestens eine primäre oder sekundäre Aminogruppe tragen. Bevorzugt sind Dihydroxyalkylcarbonsäuren, vor allem mit 3 bis 10 Kohlenstoffatomen, wie sie auch in der US-A 3 412 054 beschrieben sind. Insbesondere sind Verbindungen der allgemeinen Formel 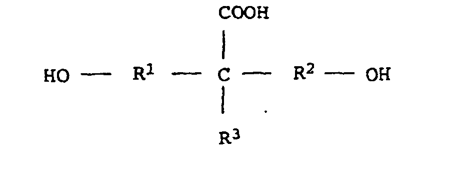 in welcher R¹ und R² für eine C₁- bis C₄-Alkandiyl-Einheit und R³ für eine C₁- bis C₄-Alkyl-Einheit steht und vor allem Dimethylolpropionsäure (DMPA) bevorzugt.

Weiterhin eignen sich entsprechende Dihydroxysulfonsäuren und Dihydroxyphosphonsäuren wie 2,3-Dihydroxypropanphosphonsäure.

Ansonsten geeignet sind Dihydroxylverbindungen mit einem Molekulargewicht über 500 bis 10000 g/mol mit mindestens 2 Carboxylatgruppen, die aus der DE-A 3 911 827 bekannt sind. Sie sind durch Umsetzung von Dihydroxylverbindungen mit Tetracarbonsäuredianhydriden wie Pyromellitsäuredianhydrid oder Cyclopentantetracarbonsäuredianhydrid im Molverhältnis 2 : 1 bis 1,05 : 1 in einer Polyadditionsreaktion erhältlich. Als Dihydroxylverbindungen sind insbesondere die als Kettenverlängerer aufgeführten Monomere (a2.2) sowie die Diole (a2.1) geeignet.

Als Monomere (a3) mit gegenüber Isocyanaten reaktiven Aminogruppen kommen Aminocarbonsäuren wie Lysin, β-Alanin, die in der DE-A 2 034 479 genannten Addukte von aliphatischen diprimären Diaminen an α,β-ungesättigte Carbonsäuren wie die N-(2-Aminoethyl)-2-aminoethancarbonsäure sowie die entsprechenden N-Aminoalkyl-aminoalkylcarbonsäuren, wobei die Alkandiyl-Einheiten aus 2 bis 6 Kohlenstoffatome bestehen, in Betracht.

Sofern Monomere mit potentiell ionische Gruppen eingesetzt werden, kann deren Überführung in die ionische Form vor, während, jedoch vorzugsweise nach der Isocyanat-Polyaddition erfolgen, da sich die ionischen Monomeren in der Reaktionsmischung häufig nur schwer lösen. Besonders bevorzugt liegen die Carboxylatgruppen in Form ihrer Salze mit einem Alkaliion oder einem Ammoniumion als Gegenion vor.

Als Monomere von den Monomeren (a2) und (a3) verschiedene Monomere (a4) kommen vor allem Verbindungen mit einer, bevorzugt 2 alkoholischen Hydroxylgruppen wie (C₁- bis C₆-Hydroxyalkyl)-acrylate, z.B. Hydroxyethylacrylat und Hydroxypropylacrylat, ein (C₁- bis C₆-Hydroxyalkyl)-methacrylat, Mono- oder Diester von Acrylsäure oder Methacrylsäure und Trimethylolpropan oder Glycerin oder um das Bisaddukt von Acrylsäure und/oder Methacrylsäure an ein Bisepoxid wie Bisphenol (R) A und Bisphenol F in Betracht.

Weiterhin ist das Addukt aus Acryl- oder Methacrylsäure und Butandioldiglycidylether besonders geeignet.

Weiterhin kommen als Monomere (a4) übliche Polyesterpolyole in Betracht, die zumindest teilweise aus Maleinsäure und Fumarsäure aufgebaut sind. Ansonsten sind diese Polyester genauso aufgebaut wie die Polyester, die als Monomere (a2.2) in Betracht kommen.

Die gegebenenfalls als Aufbaukomponenten eingesetzten Monomere (a5), die von den Monomeren (a2) bis (a4) verschieden sind, dienen im allgemeinen der Vernetzung oder der Kettenverlängerung. Es sind im allgemeinen mehr als zweiwertige nicht-aromatische Alkohole, Amine mit 2 oder mehr primären und/oder sekundären Aminogruppen sowie Verbindungen, die neben einer oder mehreren alkoholischen Hyxdroxylgruppen eine oder mehrere primäre und/oder sekundären Aminogruppen tragen.

Alkohole mit einer höheren Wertigkeit als 2, die zur Einstellung eines gewissen Verzweigungs- oder Vernetzungsgrades dienen können, sind z.B. Trimethylolpropan, Glycerin oder Zucker.

Ferner kommen Monoalkohole in Betracht, die neben der Hydroxyl-Gruppe eine weitere gegenüber Isocyanaten reaktive Gruppe tragen wie Monoalkohole mit einer oder mehreren primären und/oder sekundären Aminogruppen, z.B. Monoethanolamin.

Polyamine mit 2 oder mehr primären und/oder sekundären Aminogruppen werden vor allem dann eingesetzt, wenn die Kettenverlängerung bzw. Vernetzung in Gegenwart von Wasser stattfinden soll, da Amine in der Regel schneller als Alkohole oder Wasser mit Isocyanaten reagieren. Das ist häufig dann erforderlich, wenn wässerige Dispersionen von vernetzten Polyurethanen oder Polyurethanen mit hohem Molgewicht gewünscht werden. In solchen Fällen geht man so vor, daß man Präpolymere mit Isocyanatgruppen herstellt, diese rasch in Wasser dispergiert und anschließend durch Zugabe von Verbindungen mit mehreren gegenüber Isocyanaten reaktiven Aminogruppen kettenverlängert oder vernetzt.

Hierzu geeignete Amine sind im allgemeinen polyfunktionelle Amine des Molgewichtsbereiches von 32 bis 500 g/mol, vorzugsweise von 60 bis 300 g/mol, welche mindestens zwei primäre, zwei sekundäre oder eine primäre und eine sekundäre Aminogruppe enthalten. Beispiele hierfür sind Diamine wie Diaminoethan, Diaminopropane, Diaminobutane, Diaminohexane, Piperazin, 2,5-Dimethylpiperazin, Amino-3-aminomethyl-3,5,5-trimethyl-cyclohexan (Isophorondiamin, IPDA), 4,4'-Diaminodicyclohexylmethan, 1,4-Diaminocyclohexan, Aminoethylethanolamin, Hydrazin, Hydrazinhydrat oder Triamine wie Diethylentriamin oder 1,8-Diamino-4-aminomethyloctan.

Die Amine können auch in blockierter Form, z.B. in Form der entsprechenden Ketimine (siehe z.B. CA-1 129 128), Ketazine (vgl. z.B. die US-A 4 269 748) oder Aminsalze (s. US-A 4 292 226) eingesetzt werden. Auch Oxazolidine, wie sie beispielsweise in der US-A 4 192 937 verwendet werden, stellen verkappte Polyamine dar, die für die Herstellung der erfindungsgemäßen Polyurethane zur Kettenverlängerung der Präpolymeren eingesetzt werden können. Bei der Verwendung derartiger verkappter Polyamine werden diese im allgemeinen mit den Präpolymeren in Abwesenheit von Wasser vermischt und diese Mischung anschließend mit dem Dispersionswasser oder einem Teil des Dispersionswassers vermischt, so daß hydrolytisch die entsprechenden Polyamine freigesetzt werden.

Bevorzugt werden Gemische von Di- und Triaminen verwendet, besonders bevorzugt Gemische von Isophorondiamin und Diethylentriamin.

Die Polyurethane enthalten bevorzugt kein Polyamin oder 1 bis 10, besonders bevorzugt 4 bis 8 mol-%, bezogen auf die Gesamtmenge der Komponente (a2) bis (a4) eines Polyamins mit mindestens 2 gegenüber Isocyanaten reaktiven Aminogruppen als Monomere (a5).

Es empfiehlt sich, Verbindungen mit primären oder sekundären Aminogruppen nur in solchen Mengen einzusetzen, daß die Gesamtmenge der zum Zeitpunkt der Zugabe vorhandenen Isocyanatgruppen größer ist als die der primären oder sekundären Aminogruppen. Unter diesen Umständen läßt sich vermeiden, daß ein größerer Anteil der Aminogruppen nicht mit den Isocyanatgruppen zu Harnstoff sondern mit den Acryloyl- bzw. Methacryloylgruppen abreagiert.

Nach einer ebenfalls bevorzugten Ausführungsform enthält oder besteht die Phase (P.I) aus einer Mischung aus
- einem Polyurethan (PUR.Ib) und
- einem Polyurethan (PUR.Ic) als Verbindung (V.I),
wobei das Polyurethan (PUR.Ib) aufgebaut ist aus
b1) mehrwertigen Isocyanaten mit 4 bis 30 C-Atomen,
b2) Polyolen, von denen
   b2.1) 10 bis 100 mol-%, bezogen auf die Gesamtmenge der Diole (b2), ein Molekulargewicht von 500 bis 5000 aufweisen, und
   b2.2) 0 bis 90 mol-%, bezogen auf die Gesamtmenge der Diole (b), ein Molekulargewicht von 60 bis 500 g/mol aufweisen,
b3) von den Monomeren (b1) und (b2) verschiedenen Monomeren mit wenigstens einer Isocyanatgruppe oder wenigstens einer gegenüber Isocyanatgruppen reaktiven Gruppe, die darüberhinaus wenigstens eine hydrophile Gruppen oder eine potentiell hydrophile Gruppe tragen, wodurch die Wasserdispergierbarkeit der Polyurethane bewirkt wird,
b4) gegebenenfalls weiteren von den Polyolen (b2) und Monomeren (b3) verschiedenen mehrwertigen Verbindungen mit gegenüber Isocyanaten reaktiven Gruppen, bei denen es sich um alkoholische Hydroxylgruppen oder primäre oder sekundäre Aminogruppen handelt,
und das Polyurethan (PUR.Ic) aufgebaut ist aus
c1) mehrwertigen Isocyanaten mit 4 bis 30 C-Atomen,
c2) Polyolen, von denen
   c2.1) 10 bis 100 mol-%, bezogen auf die Gesamtmenge der Diole (c2), ein Molekulargewicht von 500 bis 5000 aufweisen, und
   c2.2) 0 bis 90 mol-%, bezogen auf die Gesamtmenge der Diole (c2), ein Molekulargewicht von 60 bis 500 g/mol aufweisen,
c3) von den Monomeren (c1) und (c2) verschiedenen Monomeren mit wenigstens einer Isocyanatgruppe oder wenigstens einer gegenüber Isocyanatgruppen reaktiven Gruppe, die darüber hinaus wenigstens eine Acryloyl- oder Methacryloylgruppe tragen.

Das Mengenverhältnis des Polyurethans (PUR.Ib) zu Verbindung (V.I) beträgt dabei im allgemeinen 0,5 : 1 bis 10 : 1.

Als Monomere (b1), (b2), (b3) und (b4) kommen besonders die entsprechenden Monomere in Betracht, die als Monomere (a1), (a2), (a3) und (a5) bevorzugt sind.

Als Monomere (c1), (c2.1), (c2.2) und (c3) sind besonders die entsprechenden Monomere geeignet, die als Monomere (a1), (a2.1), (a2.2) und (a4) bevorzugt sind.

Bevorzugt werden die Monomere (c3) in solchen Mengen eingesetzt, daß das Polyurethan (PUR.Ic) 0,2 bis 4 mol Gruppen mit einer C-C-Doppelbindung, in denen die Doppelbindung durch eine direkt gebundene Carbonylgruppe aktiviert ist, pro kg Polyurethan (PUR.Ic) enthält.

Als Verbindungen (V.I) kann die disperse Phase (P.I) auch acryloyl- oder methacryloylgruppenhaltige Ester eingesetzt werden, wie sie aus der EP-A-447 845, 279 303 oder der 127 766 bekannt sind.

Dabei handelt es sich bevorzugt um Ester, erhältlich durch Umsetzung von
- Polyolen, wie sie als Monomere (a2.1) und (a2.2) beschrieben sind sowie um höhere niedermolekulare Alkohole wie Glycerin, Trimethylolpropan und Pentaerythrol, wobei diese Alkohole gegebenenfalls ethoxyliert oder propoxyliert sind,
- 2- bis 4wertigen C₃- bis C₃₆-Carbonsäuren, z.B. Adipinsäure und
- Acryl- und/oder Methacrylsäure,
zu einem carbonsäuregruppenhaltigen Polyester, und anschließende Veresterung der Carbonsäuregruppen dieser Ester durch Umsetzung mit äquivalenten Mengen einer Epoxidverbindung.

Geeignet sind vor allem Verbindungen (V.I), die in einem Lösungsmittel, in dem üblicherweise die Herstellung der Polyurethane (PUR.Ia) vorgenommen wird, bei 20°C zu mindestens 5 Gew.-% löslich sind und pro 100 g 0,1 bis 1 mol Gruppen mit einer C-C-Doppelbindung, in denen die Doppelbindung durch eine daran direkt gebundene Carbonylgruppe aktiviert ist, tragen.

Bevorzugt weisen sowohl das Polyurethan (PUR.Ia) als auch die Verbindung (V.I) in Wasser eine Löslichkeit von weniger als 5 g/l, besonders bevorzugt von weniger als 1 g/l auf (gemessen bei 20°C).

Auf dem Gebiet der Polyurethanchemie ist allgemein bekannt, wie das Molekulargewicht der Polyurethane durch Wahl der Anteile der miteinander reaktiven Monomere sowie dem arithmetischen Mittel der Zahl der reaktiven funktionellen Gruppen pro Molekül eingestellt werden kann.

Normalerweise werden die Komponenten (a1) bis (a5) bzw. (b1) bis (b4) sowie ihre jeweiligen Molmengen so gewählt, daß das Verhältnis A : B mit
A) der Molmenge an Isocyanatgruppen und
B) der Summe aus der Molmenge der Hydroxylgruppen und der Molmenge der funktionellen Gruppen, die mit Isocyanaten in einer Additionsreaktion reagieren können
0,5 : 1 bis 2 : 1, bevorzugt 0,8 : 1 bis 1,5, besonders bevorzugt 0,9 : 1 bis 1,2 : 1 beträgt. Ganz besonders bevorzugt liegt das Verhältnis A : B möglichst nahe an 1 : 1.

Bevorzugt werden die Monomere (a4) 0,05 bis 3 in solchen Mengen eingesetzt, daß das Polyurethan (PUR.Ia) 50 bis 1000, besonders bevorzugt 0,2 bis 1 mol Gruppen mit einer C-C-Doppelbindung, in denen die Doppelbindung durch eine daran direkt gebundene Carbonylgruppe aktiviert ist, pro kg Polyurethan (PUR.Ia) enthält.

Die erfindungsgemäßen Dispersionen lassen sich auf einfache Weise herstellen, indem man eine Dispersion (D.I), enthaltend in disperser Form ein Polyurethan mit Gruppen mit einer C-C-Doppelbindung, in denen die Doppelbindung durch eine direkt gebundene Carbonylgruppe aktiviert ist, (disperse Phase P.I), wobei diese Dispersion (D.I) jedoch frei ist von in dispergierter Form vorliegenden wasserunlöslichen Verbindungen, die 2 Gruppen ausgewählt aus der Gruppe der Thiolgruppen, primären Aminogruppen oder sekundären Aminogruppen tragen (disperse Phase P.II) mit einer Dispersion (D.II), enthaltend disperse Phase (P.II), nicht jedoch disperse Phase (P.I), vermischt.

Das Vermischen der beiden Dispersionen ist unkritisch und kann beispielsweise erfolgen, indem man eine Dispersion in eine andere einrührt. Die Dispersionen sollten gleichsinnig geladen sein.

Dispersionen (D.I), die ein Polyurethan (PUR.Ia) mit einer C-C-Doppelbindung, in denen die Doppelbindung durch eine direkt gebundene Carbonylgruppe aktiviert ist,Acryloyl- oder Methacryloylgruppen tragen, sind allgemein bekannt (vgl. EP-A-443 537, 183 119, 181 486, 189 945 sowie 353 797).

Meistens werden die Dispersionen (D.I) nach einem der folgenden Verfahren hergestellt:

Nach dem "Acetonverfahren" wird in einem mit Wasser mischbaren und bei Normaldruck unter 100°C siedenden Lösungsmittel aus den Komponenten (a1) bis (a5) bzw. (b1) bis (b4) ein wasserdispergierbares Polyurethan hergestellt. Es wird soviel Wasser zugegeben, bis sich eine Dispersion bildet, in der Wasser die kohärente Phase darstellt.

Das "Präpolymer-Mischverfahren" unterscheidet sich vom Acetonverfahren darin, daß nicht ein ausreagiertes (potentiell) wasserdispergierbares Polyurethan, sondern zunächst ein wasserdispergierbares Präpolymer hergestellt wird, das Isocyanat-Gruppen trägt. Die Komponenten (a1) bis (a5) bzw. (b1) bis (b4) werden hierbei so gewählt, daß das definitionsgemäße Verhältnis A : B größer 1,0 bis 3, bevorzugt 1,05 bis 1,5 beträgt. Das Präpolymer wird zuerst in Wasser dispergiert und anschließend gegebenenfalls durch Reaktion der Isocyanat-Gruppen mit Aminen, die mehr als 2 gegenüber Isocyanaten reaktive Aminogruppen tragen, vernetzt oder mit Aminen die 2 gegenüber Isocyanaten reaktive Aminogruppen tragen, kettenverlängert. Eine Kettenverlängerung findet auch dann statt, wenn kein Amin zugesetzt wird. In diesem Fall werden Isocyanatgruppen zu Amingruppen hydrolysiert, die mit noch verbliebenen Isocyanatgruppen der Präpolymere unter Kettenverlängerung abreagieren.

Im Fall des Präpolymeren aus den Monomeren (b1) bis (b4) wird das stöchiometrische Verhältnis der Einsatzstoffe und die Reaktionszeit bevorzugt so gewählt, daß das Präpolymer vor seiner Dispergierung einen Gehalt von weniger als 0,1 Gew.-% NCO-Gruppen pro kg Präpolymer enthält. Es wird dabei von einem Gewicht der NCO-Gruppen von 42 g pro Mol ausgegangen.

Die Polyaddition der Komponenten (a1) bis (a5) bzw. (b1) bis (b4) erfolgt im allgemeinen bei Reaktionstemperaturen von 20 bis 180°C, bevorzugt 50 bis 150°C unter Normaldruck oder unter autogenem Druck.

Die erforderlichen Reaktionszeiten können sich über wenige Minuten bis einige Stunden erstrecken. Es ist auf dem Gebiet der Polyurethanchemie bekannt, wie die Reaktionszeit durch eine Vielzahl von Parametern wie Temperatur, Konzentration der Monomere, Reaktivität der Monomeren beeinflußt wird.

Zur Beschleunigung der Reaktion der Diisocyanate können die üblichen Katalysatoren, wie Dibutylzinndilaurat, Zinn-II-octoat oder Diazabicyclo-(2,2,2)-octan, mitverwendet werden.

Als Polymerisationsapparate kommen Rührkessel in Betracht, insbesondere dann, wenn durch Mitverwendung von Lösungsmitteln für eine niedrige Viskosität und eine gute Wärmeabfuhr gesorgt ist.

Bevorzugte Lösungsmittel sind mit Wasser unbegrenzt mischbar, weisen einen Siedepunkt bei Normaldruck von 40 bis 100°C auf und reagieren nicht oder nur langsam mit den Monomeren.

Die Dispersionen (D.I), die als disperse Phase (P.I) eine Mischung aus dem Polyurethan (PUR.Ib) und der Verbindung (V.I) enthalten, werden zweckmäßigerweise hergestellt, indem man beim Acetonverfahren das noch nicht dispergierte Polyurethan (PUR.Ib) und beim Präpolymer-Mischverfahren das entsprechende Präpolymer mit der Verbindung (V.I) vermischt und diese Mischungen in Wasser dispergiert. Durch diese Art der Codispergierung bildet sich eine disperse Phase, in der das Polyurethan (PUR.Ib) und die Verbindung (V.I) nebeneinander, d.h. beide gemeinsam in einem Teilchen, vorliegen.

Diese Methode der Codispergierung ist beispielsweise in der DE-A-3 903 538, 4 309 079 und 4 0 24 567 am Beispiel von Polymeren, z.B. hydrophoben Hilfsmitteln wie Phenol-Kondensationsharze aus Aldehyden und Phenol bzw. Phenolderivaten oder Epoxidharzen beschrieben.

Üblicherweise wird, falls bei der Herstellung des Polyurethans ein Lösungsmittel mitverwendet wurde, der größte Teil des Lösungsmittels aus der Dispersion entfernt, beispielsweise durch Destillation bei vermindertem Druck. Bevorzugt weisen die Dispersionen einen Lösungsmittelgehalt von weniger als 10 Gew.-% und sind besonders bevorzugt frei von Lösungsmitteln.

Diese hydrophoben Hilfsmittel können ebenfalls in der dispersen Phase (P.I) enthalten sein.

Die Dispersionen (D.I) haben im allgemeinen einen Feststoffgehalt von 10 bis 75, bevorzugt von 20 bis 65 Gew.-% und eine Viskosität von 10 bis 500 mPas (gemessen bei einer Temperatur von 20°C und einer Schergeschwindigkeit von 250 s⁻¹).

Die erfindungsgemäßen Dispersionen lassen sich außer durch Vermischung der Dispersionen (D.I) und (D.II) weiterhin herstellen, indem man im Fall des Präpolymer-Mischverfahrens das Präpolymer von Polyurethan (PUR.Ia) bzw. die Mischung aus dem Präpolymer von Polyurethan (PUR.Ib) und Verbindung (V.I) und im Fall des Acetonverfahrens das Polyurethan (PUR.Ia) bzw. die Mischung aus dem Polyurethan (PUR.Ib) und Verbindung (V.I) direkt in einer wässerigen Dispersion (D.II) dispergiert.

Die Phase (P.II) enthält bevorzugt oder besteht besonders bevorzugt aus einem Polyurethan (PUR.IId), das Gruppen, die die Wasserdispergierbarkeit des Polyurethans bewirken trägt, ein Polymer (POL.IIa), hergestellt aus radikalisch polymerisierbaren Monomeren mit C=C-Doppelbindungen nach der Methode der radikalischen Emulsions- oder Suspensionspolymerisation, oder ein Polymer (POL.IId), das Gruppen, die die Wasserdispergierbarkeit des Polymeren bewirken, trägt, hergestellt aus radikalisch polymerisierbaren Monomeren mit C=C-Doppelbindungen nach der Methode der radikalischen Substanz oder Lösungspolymerisation. Das Polyurethan (PUR.IIa) oder das Polymer (POL.IIa) oder (POL.IIb) trägt bevorzugt 50 bis 1000 mmol/kg primäre Aminogruppen, sekundäre Aminogruppen oder Thiolgruppen.

Bevorzugt weisen sowohl das Polyurethan (PUR.Id) als auch das Polymer (POL.IIa) (POL.IIb) in Wasser eine Löslichkeit von weniger als 5 g/l, besonders bevorzugt von weniger als 1 g/l auf (gemessen bei 20°C).

Nach einer ebenfalls bevorzugten Ausführungsform enthält oder besteht die Phase (P.II) aus einer Mischung aus
- einem Polyurethan (PUR.IIe), das Gruppen, die die Wasserdispergierbarkeit des Polyurethans bewirken trägt, ein Polymer (POL.IIc), hergestellt aus radikalisch polymerisierbaren Monomeren mit C=C-Doppelbindungen nach der Methode der radikalischen Emulsions- oder Suspensionspolymerisation, oder ein Polymer (POL.IId), das Gruppen die die Wasserdispergierbarkeit des Polymeren bewirken trägt, hergestellt aus radikalisch polymerisierbaren Monomeren mit C=C-Doppelbindungen nach der Methode der radikalischen Substanz- oder Lösungspolymerisation, wobei das Polyurethan (PUR.IIa) oder das Polymer (POL.IIc) oder (POL.IId) pro kg weniger als 0,05 mmol primäre Aminogruppen, sekundäre Aminogruppen oder Thiolgruppen trägt und
- einer Verbindung (V.II), die mindestens 2 Gruppen ausgewählt aus der Gruppe der Thiolgruppen, primären Aminogruppen oder sekundären Aminogruppen trägt und eine Löslichkeit in Wasser von 1 g/l und ein Molekulargewicht von weniger als 10000 aufweist.

Dispersionen (D.II), die diese dispersen Phasen (P.II) enthalten und frei sind von dispersen Phasen (P.I) und durch Vermischung mit Dispersionen (D.I) die erfindungsgemäßen wässerigen Dispersionen ergeben, sind allgemein bekannt.

Bevorzugt verwendet man als Dispersion (D.II) eine Dispersion, die als disperse Phase (P.II) ein Polyurethan (PUR.IId) enthält, das aufgebaut ist aus
d1) mehrwertigen Isocyanaten mit 4 bis 30 C-Atomen,
d2) Polyolen, von denen
   d2.1) 10 bis 100 mol-%, bezogen auf die Gesamtmenge der Diole (d2), ein Molekulargewicht von 500 bis 5000 aufweisen, und
   d2.2) 0 bis 90 mol-%, bezogen auf die Gesamtmenge der Diole (d2), ein Molekulargewicht von 60 bis 500 g/mol aufweisen,
d3) von den Monomeren (d1) und (d2) verschiedene Monomere mit wenigstens einer Isocyanatgruppe oder wenigstens einer gegenüber Isocyanatgruppen reaktiven Gruppe, die darüberhinaus wenigstens eine hydrophile Gruppen oder eine potentiell hydrophile Gruppe tragen, wodurch die Wasserdispergierbarkeit der Polyurethane bewirkt wird und
d4) von den Monomeren (d2) bis (d3) verschiedene Verbindungen mit mehreren Gruppen, bei denen es sich um primäre Aminogruppen, sekundäre Aminogruppen oder Thiolgruppen handelt.

Als Monomere (d1) bis (d3) sind besonders die entsprechenden Monomere geeignet, die als Monomere (a1), bis (a3) bevorzugt sind. Als Monomere (d4) sind die mehrwertigen Amine geeignet, die als Monomere (a5) aufgeführt sind.

Weiterhin sind als Monomere (d4) thiolgruppenhaltige Aminosäuren, und Alkohole, z.B. CH₂SH-CH₂OH oder CH₂OH-CHOH-CH₂SH geeignet.

Bei der Herstellung der Dispersion (D.II), die als Polyurethan (PUR.IId) eines mit Aminogruppen als funktionelle Gruppen enthält, geht man zweckmäßigerweise nach dem Präpolymer-Mischverfahren vor, d.h. man polymerisiert wie üblich die Monomere (d1) bis (d3), dispergiert das Präpolymer in Wasser und setzt der Dispersion anschließend das Monomer (d5) zu. Die Menge an Monomer (d5) wird bevorzugt so gewählt, daß das molare Verhältnis Monomer (d5) zu den im Präpolymer vorhandenen NCO-Gruppen 0,9 : 1 bis 1,1 : 1 beträgt.

Weiterhin sind Dispersionen, die ein Polyurethan enthalten, das primäre und/oder sekundäre Aminogruppen trägt aus der DE-A-2 734 576, der DE-A-2 753 942, der EP-A-390 370, der EP-A-442 654 bekannt.

Dispersionen (D.II) enthaltend Polyurethane (PUR.IId) mit Thiolgruppen sind beispielsweise aus der DE-A-2 642 073 bekannt.

Diese wasserunlöslichen Verbindungen weisen bevorzugt eine Löslichkeit in Wasser bei einer Temperatur von 20°C von weniger als 5, besonders bevorzugt von weniger als 1 g/l auf.

Als Dispersionen (D.II), die als disperse Phase ein Polymer (POL.IIa) enthalten, kommen Primärdispersionen in Betracht, die erhältlich sind, indem man übliche radikalisch polymerisierbare Monomere nach der Methode der Suspensionspolymerisation oder 5 Emulsionspolymerisation in wässerigem Medium polymerisiert. Zur Funktionalisierung der Polymere (POL.IIa) mit primäre Aminogruppen, sekundäre Aminogruppen oder Thiolgruppen geht man dabei so vor, daß man Isocyanate mit radikalisch polymerisierbaren Doppelbindungen, z.B. TMXDI)oder als Regler geeignete Thiole einsetzt, wie sie aus US-A-5 227 463 bekannt sind.

Als Dispersionen (D.II), die als disperse Phase ein Polymer (POL.IIb) enthalten, kommen weiterhin Sekundärdispersionen in Betracht, enthaltend (POL.IId), das Gruppen die die Wasserdispergierbarkeit des Polymeren bewirken, z.B. Carbonsäuregruppen trägt. Diese Dispersionen werden aus üblichen radikalisch polymerisierbaren Monomeren mit C-C-Doppelbindungen unter Mitverwendung von Acrylsäure und/oder Methacrylsäure nach der Methode der radikalischen Substanz oder Lösungspolymerisation hergestellt und anschließende in Wasser dispergiert. Zur nachträglichen Funktionalisierung mit primären Aminogruppen können diese Dispersionen mit Ethylenimin umgesetzt werden, wie es in der EP-A-341 886 angegeben ist.

Nach einer ebenfalls bevorzugten Ausführungsform verwendet man als Dispersion (D.II) eine Dispersion, bei der die disperse Phase (II) enthält oder bevorzugt besteht aus einer Mischung aus einem Polyurethan (PUR.IIe), das besonders bevorzugt gleich aufgebaut ist wie das Polyurethan (PUR.Ib) und einer Verbindung (V.II). Das Verfahren, zur Herstellung dieser Dispersionen ist dem der Herstellung von Dispersionen (D.I) analog, die als disperse Phase eine Mischung von Polyurethan (PUR.Ib) und Verbindung (V.I) enthalten, d.h. man dispergiert eine Mischung aus dem Polyurethan (PUR.IIe) bzw. dessen Präpolymer und der Verbindung (V.II) in Wasser.

Weiterhin sind Dispersionen (D.II) bevorzugt, bei der die disperse Phase (II) enthält oder bevorzugt besteht aus einer Mischung aus einem Polymer (POL.IId) hergestellt aus radikalisch polymerisierbaren Monomeren mit C=C-Doppelbindungen nach der Methode der radikalischen Substanz oder Lösungspolymerisation.

Dabei handelt es sich im allgemeinen um Sekundärdispersionen, die erhältlich sind, indem man in Substanz oder in Lösung übliche radikalisch polymerisierbare Monomere mit C=C-Doppelbindungen polymerisiert, wobei ein Teil dieser Monomere hydrophile Gruppen, z.B. Carbonsäuregruppen trägt. Die Verbindung (V.II) wird nach Beendigung der Polymerisation, während der Polymerisation oder den Ausgangsstoffen zugesetzt. Üblicherweise wird die Mischung aus dem Polymerisat und der Verbindung (V.II) durch Einrühren in Wasser dispergiert.

Derartige Dispersionen sind allgemein bekannt und beispielsweise in der EP-A-467 908 beschrieben.

Als Verbindungen (V.II) kommen vor allem C₆- bis C₃₀- aralipahtisches oder C₄ - bis C₃₀ -aliphatische Polyamine, bevorzugt Di-oder Triamine sowie Polyester aus einem C₂- bis C₁₀-Alkylalkohol und einer C₂- bis C₁₀-Thiomonocarbonsäure, z.B. Pentaerythrol-tetrakis-3-mercaptopropionat in Betracht.

Die erfindungsgemäßen Polyurethandispersionen können weitere wasseremulgierbare oder -dispergierbare Harze, wie Polymer-, _{P}olyurethane, Polyester-, Epoxyd- oder Alkydharze sowie handelsübliche Hilfs- und Zusatzstoffe wie Treibmittel, Entschäumer, Emulgatoren, Verdickungsmittel und Thixotropiermittel, Farbmittel wie Farbstoffe und Pigmente enthalten.

Sie eignen sich sich beispielsweise zum Verkleben oder Beschichten unterschiedlicher Substrate wie Holz, Metall, Kunststoffen, Papier, Leder oder Textil sowie für die Herstellung von Formkörpern und Druckfarben.

Die Verarbeitung der erfindungsgemäßen Polyurethandispersionen kann dabei nach den in der Klebstoff- oder Lackindustrie allgemein üblichen Verfahren erfolgen, also indem man die Dispersionen auf das Substrat sprüht walzt oder rakelt und anschließend trocknet.

Für den Fall der Verarbeitung als Klebstoff werden die beschichteten Werkstücke entweder vor dem Trocknen des Dispersionsfilms oder nach dem Trocknen mit einem anderen Werkstück bevorzugt unter Anwendung von Druck zusammengefügt.

Besonders feste Klebstoffverbunde erhält man, wenn man Werkstücke, die mit einem getrockneten Klebstofffilm versehen sind, unmittelbar vor, während oder nach dem Zusammenfügen auf eine Temperatur von ca. 50 bis 100°C erwärmt.

Die nach diesen Methoden hergestellten Klebstoffverbunde zeichnen sich insbesondere dadurch aus, daß sie lagerbeständig sind und sich mit Ihnen Verklebungen mit einer hohen Wärmestandfestigkeit herstellen lassen.

### Beispiele

### Herstellung einer Polyurethandispersion enthaltend eine disperse Phase P.Ia

### Beispiel 1

530 g eines Polypropylenoxiddiols mit OHZ=56 wurden mit 0.5 g DBTL, 21.4 g DMPA, 27.5 g Neopentylglykol mit 140.8 g TDI bei 110°C 2 h umgesetzt. Nach Verdünnen mit 880 g Aceton und Abkühlen auf 50°C betrug der NCO-Wert 0.6 %. Nach Neutralisation mit 17.9 g 25 %iger NaOH wurden 380 g einer 5 0%igen acetonischen Lösung eines Adduktes von 2 mol Acrylsäure an 1 mol Bisphenol A-bisglycidylethers zugegeben und mit 1200 g VE-Wasser dispergiert. Das Aceton wurde im Vakuum abdestilliert.
Acrylatgehalt: 0.86 mol/kg fest.

| Analysendaten: | |
|---|---|
| FG | 40 % |
| LD | 95 |
| pH | 8.2 |
| Visk. | 373 mPas |
| K-Wert in NMP | 44 |

### Beispiel 2

565.5 g eines Polyesters aus Adipinsäure und Butandiol mit OHZ 45 wurden in 152 g Aceton mit 0.15 g DBTL und 29. g TDI 1 h bei 65°C umgesetzt. Dann wurden 28.6 g HDI zudosiert und noch weitere 37 min bei dieser Temperatur gehalten. Es wurde mit 609.9 g Aceton verdünnt und auf 50°C abgekühlt. Der NCO-Wert betrug 0.65 %. Es wurde mit 40.9 g PUD-Salz kettenverlängert und 380 g einer 50 %igen acetonischen Lösung eines Adduktes von 2 mol Acrylsäure an ein mol Bisphenol A-bis-glycidylethers zugegeben. Anschließend wurde mit 1200 g VE-Wasser dispergiert. Nach Abdestillieren des Acetons im Vakuum wird auf 40 % Festgehalt eingestellt.
Acrylatgehalt: 0.826 mol/kg

| Analysendaten: | |
|---|---|
| FG | 40 % |
| LD | 52 |
| Visk. | 26 mPas |
| pH | 8.8 |
| K-Wert | 69 |

### Beispiel 3

605.2 g Polypropylenoxiddiol OHZ=56, 0.5 g DBTL, 21.5 g DMPA, 14.8 g Neopentylglykol wurden mit 139.9 g TDI 2 h bei 110°C umgesetzt. Es wurden 100 g Aceton, 0.1 g Hydrochinondimethylether und 18.6 g Hydroxyethylacrylat zugegeben und weitere 2 h bei 90°C umgesetzt. Nach Verdünnen mit 878 g Aceton und Abkühlen auf 50°C betrug der NCO-Gehalt 0.48 %. Es wird mit 6.4 g NaOH gelöst in 20 g VE-Wasser neutralisiert und mit 1200 g VE-Wasser dispergiert. Das Aceton wurde im Vakuum abdestilliert.
Acrylgruppengehalt: 0.2 mol/kg fest

| Analysendaten: | |
|---|---|
| FG | 40 % |
| LD | 91 |
| Visk. | 380 mPas |
| pH | 8.7 |
| K-Wert | 33 |

### Beispiel 4

385.3 g eines Polyesterdiols aus Adipinsäure und Ethylenglykol (OHZ=42), 0.5 g DBTL, 21.45 g DMPA, 0.1 g Dimethylhydrochinon und 269.7 g eines Adduktes von 2 mol Acrylsäure an 1 mol Butandiol-1,4-bisglycidylether (Mn=330) werden vorgelegt und mit 123.5 g TDI 1 h bei 110°C umgesetzt. Es wird mit 977 g Aceton verdünnt uns auf 50°C abgekühlt. Der NCO-Wert ist auf NCO=0 abgefallen. Es wird mit 6.4 g NaOH in 20 g VE-Wasser neutralisiert und mit 1200 g VE-Wasser dispergiert. Das Aceton wird im Vakuum abdestilliert und der Feststoffgehalt auf 40 % eingestellt.
Acrylatgehalt: 2 mol/kg Feststoff.

| Analysendaten: | |
|---|---|
| FG | 40 % |
| LD | 94 |
| Visk. | 38 mPas |
| pH | 7.9 |
| K-wert | 32 |

### Herstellung einer Polyurethandispersion enthaltend eine disperse Phase P.II

### Beispiel 5

595,1 g Polypropylenoxiddiol mit OHZ=56, 0.5 g DBTL, 30.9 g Neopentylglykol, 21.5 g DMPA wurden mit 152.5 g TDI 2 h bei 110°C umgesetzt. Nach Verdünnen mit 977 g Aceton und Abkühlen auf 50°C betrug der NCO-Gehalt 0.5 %. Es wurde mit 17.9 g 25 %iger NaOH neutralisiert und mit 1200 g VE-Wasser dispergiert. Sofort nach Beendigiung der Dispergierung wurden 46.9 g Pentaerythrol-tetrakis-3-mercaptopropionat in 100 g Aceton zugetropft. Das Aceton wurde im Vakuum abdestilliert und die Dispersion auf 35 % Feststoffgehalt eingestellt.
SH-Gehalt: 0.24 mol/kg

| Analysendaten: | |
|---|---|
| FG | 35 % |
| LD | 97 |
| Visk. | 290 mPas |
| pH | 8.4 |
| K-Wert | 44 |

### Beispiel 6:

572.3 g eines Polyesterdiols aus Adipinsäure und Ethylenglykol (OHZ=42), 0.5 g DBTL, 21.4 g DMPA und 38.6 g Butandiol-1,4 werden mit 167.7 g TDI 50 min bei 110°C umgesetzt. Dann wird mit 977 g Aceton verdünnt und dabei auf 50°C abgekühlt. Der NCO-Wert beträgt jetzt 0.67 %. Es wird mit 6.4 g NaOH in 20 g VE-Wasser neutralisiert und mit 1200 g VE-Wasser dispergiert. Sofort danach werden 78.2 g Pentaerythrol-tetrakis-C3-mercaptopropionat in 100 g Aceton zugetropft. Nach der Zugabe von 8 g einer 45 %igen Lösung von Polyacrylsäure (pH=7) in 30 g Wasser wurde das Aceton abdestilliert, und die Dispersion auf 40 % Feststoffgehalt eingestellt.
Thiolgehalt: 0.4 mol/kg

| Analysendaten: | |
|---|---|
| FG | 40 % |
| LD | 98 |
| visk. | 113 mPas |
| pH | 8.6 |
| K-Wert | ungelöst |

### Herstellung der Dispersionen enthaltend P.Ia und P.II

### Beispiel 7

Die Dispersion aus Beispiel 1 und Beispiel 5 wurden in solchen Mengenverhältnissen gemischt, daß äquivalente Mengen an SH- und Acrylgruppen vorlagen. K-Wert: 45.6

Es wurde ein Film gegossen und 3 Tage bei 40°C getrocknet. K-Wert: ungelöste Teile.

### Beispiel 8

100 g der Dispersion aus Beispiel 4 und 181.2 g der Dispersion aus Beispiel 6 wurden gemischt. K-Wert der Mischung: 44.3. Von der Mischung wird ein Film gegossen und 3 Tage bei 40°C getrocknet; K-Wert der Films: ungelöst.

### Anwendungstechnische Prüfung der Dispersionen

Die in der Tabelle 1 angegebenen Dispersionen wurden nach folgender Vorschrift auf ihre klebetechnischen Eigenschaften untersucht:

Die Dispersionen werden mit 2 % Collacral VL verdickt und auf je 5 Hartfaserplatten (20 cm x 3 cm) 2 mm dick aufgerakelt und 3 min bei 60°C getrocknet. Dann wird eine ASA-Folie mit 0.5 N/mm2 30 s bei 80°C aufgepreßt.

Es wird über die Schälfestigkeit die Wärmestandfestigkeit bestimmt. Nach 24 h erfolgt die Prüfung der Wärmestandfestigkeit. Dazu wird die ASA-Folie in einem Abschälwinkel von 180° mit einem Gewicht von 300 g belastet. Die Temperatur wird alle 30 Minuten um 10°C erhöht. Als Wärmestandfestigkeit wird die höchste Temperatur angegeben, bei der die Ablaufstrecke gerade noch kleiner ist als 50 mm.

**Tabelle 1**

| | WSF in °C |
|---|---|
| Beispiel 4 | 4x60 |
| Beispiel 6 | 4x<60 |
| Beispiel 8 | 4x80; 1x90 |

### Abkürzungen

- OHZ =: Hydroxylzahl
- B14=: 1,4-Butandiol
- TDI=: Toluylendiisocyanat
- HDI=: Hexamethylendiisocyanat
- PUD-Salz=: Na-Salz des Michael-Addukts aus Acrylsäure und Ethylendiamin
- DBTL=: Dibutylzinndilaurat
- DMPA=: Dimethylolpropionsäure
- FG=: Feststoffgehalt

Die Viskositäten der Dispersionen wurden bei einer Temperatur von 20°C und einer Schergeschwindigkeit von 250s⁻¹ mit einem Rotations-Rheometer mit konzentrischen Zylindern (Spindeldurchmesser 38,7 mm, Becherdurchmesser: 42,0 mm) vermessen.

Die Teilchengröße der Latexpartikel (LD) wurde indirekt über Trübungsmessungen bestimmt. Hierzu wurde die Trübung einer Dispersion mit einem Feststoffgehalt von 0,01 Gew.-% relativ zu dest. Wasser bei einer Schichtdicke von 2,5 cm und bei Raumtemperatur bestimmt.

Der K-Wert wurde nach der in Kirk-Othmer, Encyclopedia of Chemical Technology, Third Edition, John Wiley & Sons, Inc. 1983, Volume 23 auf S. 967 beschriebenen Methode bestimmt. Als Lösungsmittel diente N-Methylpyrrolidon.

## Patentansprüche

1. Latent vernetzende wässerige Polyurethandispersionen, enthaltend
I) eine disperse Phase (P.I), enthaltend
Ia) ein Polyurethan (PUR.Ia), das neben Gruppen, die die Wasserdispergierbarkeit des Polyurethans bewirken, Gruppen mit einer C-C-Doppelbindung, in denen die Doppelbindung durch eine daran direkt gebundene Carbonylgruppe aktiviert ist, trägt oder
Ib) eine Mischung aus
- einem Polyurethan (PUR.Ib), das Gruppen, die die Wasserdispergierbarkeit des Polyurethans bewirken, jedoch keine Gruppen mit einer C-C-Doppelbindung, in denen die Doppelbindung durch eine daran direkt gebundene Carbonylgruppe aktiviert ist, trägt und
- einer Verbindung (V.I) verschieden von den Polyurethanen PUR.Ia und PUR.Ib, die Gruppen mit einer C-C-Doppelbindung, in denen die Doppelbindung durch eine daran direkt gebundene Carbonylgruppe aktiviert ist, trägt und
II) eine disperse Phase (P.II), enthaltend eine Verbindung verschieden von den Verbindungen (PUR.Ia), (PUR.Ib) und (V.I), die mehrere Gruppen, ausgewählt aus der Gruppe der Thiolgruppen, primären Aminogruppen oder sekundären Aminogruppen, trägt.

2. Wässerige Dispersionen nach Anspruch 1, wobei die Phase (P.I) ein Polyurethan (PUR.Ia), aufgebaut aus
a1) mehrwertigen Isocyanaten mit 4 bis 30 C-Atomen,
a2) Polyolen, von denen
a2.1) 10 bis 100 mol-%, bezogen auf die Gesamtmenge der Diole (a2), ein Molekulargewicht von 500 bis 5000 aufweisen, und
a2.2) 0 bis 90 mol-%, bezogen auf die Gesamtmenge der Diole (a2), ein Molekulargewicht von 60 bis 500 g/mol aufweisen,
a3) von den Monomeren (a1) und (a2) verschiedene Monomere mit wenigstens einer Isocyanatgruppe oder wenigstens einer gegenüber Isocyanatgruppen reaktiven Gruppe, die darüberhinaus wenigstens eine hydrophile Gruppen oder eine potentiell hydrophile Gruppe tragen, wodurch die Wasserdispergierbarkeit der Polyurethane bewirkt wird,
a4) von den Monomeren (a1), (a2) und (a3) verschiedene Monomere mit wenigstens einer Isocyanatgruppe oder wenigstens einer gegenüber Isocyanatgruppen reaktiven Gruppe, die darüberhinaus wenigstens eine Acryloyl- oder Methacryloylgruppe tragen und
a5) gegebenenfalls weiteren von den Monomeren (a2) bis (a4) verschiedenen mehrwertigen Verbindungen mit gegenüber Isocyanatgruppen reaktiven Gruppen, bei denen es sich um alkoholische Hydroxylgruppen oder primäre oder sekundäre Aminogruppen handelt
enthält.

3. Wässerige Dispersionen nach Anspruch 1 oder 2, wobei es sich bei der Phase (P.I) um eine Mischung aus
- einem Polyurethan (PUR.Ib) und
- einem Polyurethan (PUR.Ic) als Verbindung (V.I) handelt,
wobei das Polyurethan (PUR.Ib) aufgebaut ist aus
b1) mehrwertigen Isocyanaten mit 4 bis 30 C-Atomen,
b2) Polyolen, von denen
b2.1) 10 bis 100 mol-%, bezogen auf die Gesamtmenge der Diole (b2), ein Molekulargewicht von 500 bis 5000 aufweisen, und
b2.2) 0 bis 90 mol-%, bezogen auf die Gesamtmenge der Diole (b), ein Molekulargewicht von 60 bis 500 g/mol aufweisen,
b3) von den Monomeren (b1) und (b2) verschiedenen Monomeren mit wenigstens einer Isocyanatgruppe oder wenigstens einer gegenüber Isocyanatgruppen reaktiven Gruppe, die darüberhinaus wenigstens eine hydrophile Gruppen oder eine potentiell hydrophile Gruppe tragen, wodurch die Wasserdispergierbarkeit der Polyurethane bewirkt wird,
b4) gegebenenfalls weiteren von den Polyolen (b2) und Monomeren (b3) verschiedenen mehrwertigen Verbindungen mit gegenüber Isocyanaten reaktiven Gruppen, bei denen es sich um alkoholische Hydroxylgruppen oder primäre oder sekundäre Aminogruppen handelt,
und das Polyurethan (PUR.Ic) aufgebaut ist aus
c1) mehrwertigen Isocyanaten mit 4 bis 30 C-Atomen,
c2) Polyolen, von denen
c2.1) 10 bis 100 mol-%, bezogen auf die Gesamtmenge der Diole (c2), ein Molekulargewicht von 500 bis 5000 aufweisen, und
c2.2) 0 bis 90 mol-%, bezogen auf die Gesamtmenge der Diole (c2), ein Molekulargewicht von 60 bis 500 g/mol aufweisen,
c3) von den Monomeren (c1) und (c2) verschiedenen Monomeren mit wenigstens einer Isocyanatgruppe oder wenigstens einer gegenüber Isocyanatgruppen reaktiven Gruppe, die darüberhinaus wenigstens eine Acryloyl- oder Methacryloylgruppe tragen.

4. Wässerige Dispersionen nach den Ansprüchen 1 bis 3, wobei es sich bei dem Monomer (a4) bzw. (c3) um ein (C₁- bis C₆-Hydroxyalkyl)-acrylat, ein (C₁- bis C₆-Hydroxyalkyl)-methacrylat oder um das Bisaddukt von Acrylsäure und/oder Methacrylsäure an ein Bisepoxid handelt.

5. Wässerige Dispersionen nach den Ansprüchen 1 bis 4, wobei die Phase (P.II) ein Polyurethan (PUR.IId), das Gruppen, die die Wasserdispergierbarkeit des Polyurethans bewirken trägt, ein Polymer (POL.IIa), hergestellt aus radikalisch polymerisierbaren Monomeren mit C=C-Doppelbindungen nach der Methode der radikalischen Emulsions- oder Suspensionspolymerisation, oder ein Polymer (POL.IId), das Gruppen die die Wasserdispergierbarkeit des Polymeren bewirken trägt, hergestellt aus radikalisch polymerisierbaren Monomeren mit C=C-Doppelbindungen nach der Methode der radikalischen Substanz- oder Lösungspolymerisation, enthält, wobei das Polyurethan (PUR.IId), die Polymere (POL.IIa) und (POL.IIb) pro kg 0,05 bis 3 mol primäre Aminogruppen, sekundäre Aminogruppen oder Thiolgruppen tragen.

6. Wässerige Dispersionen nach den Ansprüchen 1 bis 5, wobei die Phase (P.II) eine Mischung aus
- einem Polyurethan (PUR.IIe), das Gruppen, die die Wasserdispergierbarkeit des Polyurethans bewirken trägt, einem Polymer (POL.IIc), hergestellt aus radikalisch polymerisierbaren Monomeren mit C=C-Doppelbindungen nach der Methode der radikalischen Emulsions- oder Suspensionspolymerisation, oder einem Polymer (POL.IId), das Gruppen die die Wasserdispergierbarkeit des Polymeren bewirken trägt, hergestellt aus radikalisch polymerisierbaren Monomeren mit C=C-Doppelbindungen nach der Methode der radikalischen Substanz- oder Lösungspolymerisation, wobei das Polyurethan (PUR.IIe) oder die Polymere (POL.IIc) oder (POL.IId) pro kg weniger als 0,05 mol primäre Aminogruppen, sekundäre Aminogruppen oder Thiolgruppen tragen, und
- einer Verbindung (V.II), die mindestens 2 Gruppen ausgewählt aus der Gruppe der Thiolgruppen, primären Aminogruppen oder sekundären Aminogruppen trägt und eine Löslichkeit in Wasser von weniger als 1 g/l und ein Molekulargewicht von weniger als 10000 aufweist,
enthält.

7. Wässerige Dispersionen nach den Ansprüchen 1 bis 6, wobei es sich bei der Verbindung (V.II) um
- ein C₆- bis C₃₀-aralipahtisches oder C₄- bis C₃₀-aliphatisches Polyamin oder
- einen Ester aufgebaut aus einem mehrwertigen C₂- bis C₁₀-Alkylalkohol und einer C₂- bis C₁₀-Thiomonocarbonsäure
handelt.

8. Wässerige Dispersionen nach Anspruch 7, wobei es sich bei der Verbindung (V.II) um Pentaerythrol-tetrakis-3-mercaptopropionat handelt.

9. Latent vernetzende wässerige Polyurethandispersionen nach den Ansprüchen 1 bis 8, wobei es sich bei den Gruppen mit einer C-C-Doppelbindung, in denen die Doppelbindung durch eine daran direkt gebundene Carbonylgruppe aktiviert ist, handelt.

10. Verwendung der Dispersionen nach den Ansprüchen 1 bis 9 als Beschichtungsmittel oder Klebstoff.

11. Gegenstände aus Holz, Metall, Textil, Leder oder Kunststoff, die mit einer wässerigen Dispersion nach den Ansprüchen 5 bis 8 verklebt, imprägniert oder beschichtet sind.

## Claims

1. An aqueous polyurethane dispersion having latent crosslinking properties and containing
I) a disperse phase (P.I), containing
Ia) a polyurethane (PUR.Ia) which, in addition to groups which impart water dispersibility to the polyurethane, carries groups which have a C-C double bond and in which the double bond is activated by a carbonyl group bonded directly therewith, or
Ib) a mixture of
- a polyurethane (PUR.Ib) which carries groups which impart water dispersibility to the polyurethane but not groups which have a C-C double bond and in which the double bond is activated by a carbonyl group bonded directly therewith and
- a compound (V.I) which differs from the polyurethanes PUR.Ia and PUR.Ib, and which carries groups which have a C-C double bond and in which the double bond is activated by a carbonyl group bonded directly therewith and
II) a disperse phase (P.II) containing a compound which differs from the compounds (PUR.Ia), (PUR.Ib) and (V.I) and which carries a plurality of groups selected from the group consisting of the thiol groups, primary amino groups and secondary amino groups.

2. An aqueous dispersion as claimed in claim 1, wherein the phase (P.I) contains a polyurethane (PUR.Ia) composed of
a1) polyfunctional isocyanates of 4 to 30 carbon atoms,
a2) polyols, of which
a2.1) from 10 to 100 mol%, based on the total amount of the diols (a2), have a molecular weight of from 500 to 5000 and
a2.2) from 0 to 90 mol%, based on the total amount of the diols (a2), have a molecular weight of from 60 to 500 g/mol,
a3) monomers which differ from the monomers (a1) and (a2) and carry at least one isocyanate group or at least one group reactive toward isocyanate groups and furthermore carry at least one hydrophilic group or one potentially hydrophilic group, imparting water-dispersibility to the polyurethanes,
a4) monomers which differ from the monomers (a1), (a2) and (a3) and carry at least one isocyanate group or at least one group reactive toward isocyanate groups which furthermore carry at least one acryloyl or methacryloyl group and
a5) if required, further polyfunctional compounds which differ from the monomers (a2) to (a4) and have groups which are reactive toward isocyanate groups and which are alcoholic hydroxyl groups or primary or secondary amino groups.

3. An aqueous dispersion as claimed in claim 1 or 2, wherein the phase (P.I) is a mixture of
- a polyurethane (PUR.Ib) and
- a polyurethane (PUR.Ic) as compound (V.I),
the polyurethane (PUR.Ib) being composed of
b1) polyfunctional isocyanates of 4 to 30 carbon atoms,
b2) polyols, of which
b2.1) from 10 to 100 mol%, based on the total amount of the diols (b2), have a molecular weight of from 500 to 5000 and
b2.2) from 0 to 90 mol%, based on the total amount of the diols (b2) have a molecular weight of from 60 to 500 g/mol,
b3) monomers which differ from the monomers (b1) and (b2) and have at least one isocyanate group or at least one group reactive toward isocyanate groups and furthermore carry at least one hydrophilic group or one potentially hydrophilic group imparting water-dispersibility to the polyurethanes,
b4) if required, further polyfunctional compounds which differ from the polyols (b2) and monomers (b3) and have groups which are reactive toward isocyanate and are alcoholic hydroxyl groups or primary or secondary amino groups,
and the polyurethane (PUR.Ic) being composed of
c1) polyfunctional isocyanates of 4 to 30 carbon atoms,
c2) polyols, of which
c2.1) from 10 to 100 mol%, based on the total amount of the diols (c2), have a molecular weight of from 500 to 5000 and
c2.2) from 0 to 90 mol%, based on the total amount of the diols (c2), have a molecular weight of from 60 to 500 g/mol,
c3) and monomers which differ from the monomers (c1) and (c2) and have at least one isocyanate group or at least one group reactive toward isocyanate groups and furthermore carry at least one acryloyl or methacryloyl group.

4. An aqueous dispersion as claimed in any of claims 1 to 3, wherein the monomer (a4) or (c3) is a hydroxy-C₁-C₆-alkyl acrylate, a hydroxy-C₁-C₆-alkyl methacrylate or the bisadduct of acrylic acid or methacrylic acid with a bisepoxide.

5. An aqueous dispersion as claimed in any of claims 1 to 4, wherein the phase (P.II) contains a polyurethane (PUR.IId) which carries groups which impart water dispersibility to the polyurethane, a polymer (POL.IIa) prepared from monomers capable of free radical polymerization and having C=C double bonds by the method of free radical emulsion or suspension polymerization or a polymer (POL.IId) which carries groups which impart water dispersibility to the polymer, prepared from monomers capable of free radical polymerization and having C=C double bonds by the method of free radical mass or solution polymerization, the polyurethane (PUR.IId) and the polymers (POL.IIa) and (POL.IIb) carrying from 0.05 to 3 mol of primary amino groups, secondary amino groups or thiol groups per kg.

6. An aqueous dispersion as claimed in any of claims 1 to 5, wherein the phase (P.II) contains a mixture of
- a polyurethane (PUR.IIe) which carries groups which impart water dispersibility to the polyurethane, a polymer (POL.IIc) prepared from monomers capable of free radical polymerization and having C=C double bonds by the method of free radical emulsion or suspension polymerization or a polymer (POL.IId) which carries groups which impart water dispersibility to the polymer, the polymer being prepared from monomers capable of free radical polymerization and having C=C double bonds by the method of free radical mass or solution polymerization, the polyurethane (PUR.IIe) or the polymers (POL.IIc) or (POL.IId) carrying less than 0.05 mol of primary amino groups, secondary amino groups or thiol groups per kg, and
- a compound (V.II) which carries at least 2 groups selected from the group consisting of the thiol groups, primary amino groups or secondary amino groups and has a solubility of less than 1 g/l in water and a molecular weight of less than 10000.

7. An aqueous dispersion as claimed in any of claims 1 to 6, wherein the compound (V.II) is
- an araliphatic C₆-C₃₀-polyamine or an aliphatic C₄-C₃₀-polyamine or
- an ester synthesized from a polyhydric C₂-C₁₀-alkyl alcohol and a C₂-C₁₀-thiomonocarboxylic acid.

8. An aqueous dispersion as claimed in claim 7, wherein the compound (V.II) is pentaerythrityl tetrakis-3-mercaptopropionate.

9. A polyurethane dispersion having latent crosslinking properties, as claimed in any of claims 1 to 8, wherein the groups having a C-C double bond in which the double bond is activated by a carbonyl group bonded directly to it are.

10. Use of a dispersion as claimed in any of claims 1 to 9 as a coating material or adhesive.

11. An article of wood, metal, textile, leather or plastic which is adhesively bonded, impregnated or coated with an aqueous dispersion as claimed in any of claims 5 to 8.

## Revendications

1. Dispersions aqueuses de polyuréthanne à réticulation latente contenant :
I) une phase dispersée (P.I.) contenant
Ia) un polyuréthanne (PUR.Ia) qui porte, outre les radicaux assurant la dispersibilité dans l'eau du polyuréthanne, des radicaux avec une double liaison C-C dans lesquels la double liaison est activée par un radical carbonyle lié directement à celle-ci ou
Ib) un mélange
- d'un polyuréthanne (PUR.Ib) qui porte des radicaux assurant la dispersibilité dans l'eau du polyuréthanne mais pas de radicaux avec une double liaison C-C dans lesquels la double liaison est activée par un radical carbonyle lié directement à celle-ci et
- d'un composé (V.I) différent des polyuréthannes PUR.Ia et PUR.Ib qui porte des radicaux avec une double liaison C-C dans lesquels la double liaison est activée par un radical carbonyle lié directement à celle-ci et
II) une phase dispersée (P.II) contenant un composé différent des composés (PUR.Ia), (PUR.Ib) et (V.I) qui porte plusieurs radicaux sélectionnés dans le groupe des radicaux thiol, des radicaux amino primaires ou des radicaux amino secondaires.

2. Dispersions aqueuses selon la revendication 1, dans lesquelles la phase (P.I) est un polyuréthanne (PUR. Ia) composé
a1) d'isocyanates multivalents avec 4 à 30 atomes de C,
a2) de polyols dont
a2.1)10 à 100% en mole par rapport à la quantité totale des diols (a2) présentent un poids moléculaire de 500 à 5000, et
a2.2)0 à 90% en mole par rapport à la quantité totale des diols (a2) présentent un poids moléculaire de 60 à 500 g/mole,
a3) de monomères différents des monomères (a1) et (a2) avec au moins un radical isocyanate ou au moins un radical réactif aux radicaux isocyanate qui portent par ailleurs au moins un radical hydrophile ou un radical potentiellement hydrophile, par lequel la dispersibilité dans l'eau des polyuréthannes est assurée,
a4) de monomères différents des monomères (a1), (a2) et (a3) avec au moins un radical isocyanate ou au moins un radical réactif aux radicaux isocyanate qui portent par ailleurs au moins un radical acryloyle ou méthacryloyle et
a5) éventuellement d'autres composés multivalents différents des monomères (a2) à (a4) avec des radicaux réactifs par rapport aux radicaux isocyanate, pour lesquels il s'agit de radicaux hydroxyle alcooliques ou de radicaux amino primaires ou secondaires.

3. Dispersions aqueuses selon l'une des revendications 1 ou 2, dans lesquelles la phase (P.I) est un mélange
- d'un polyuréthanne (PUR. Ib) et
- d'un polyuréthanne (PUR.Ic) comme composé (V.I),
le polyuréthanne (PUR.Ib) étant constitué
b1) d'isocyanates multivalents avec 4 à 30 atomes de C,
b2) de polyols dont
b2.1)10 à 100% en mole par rapport à la quantité totale des diols (b2) présentent un poids moléculaire de 500 à 5000 et
b2.2)0 à 90% en mole par rapport à la quantité totale des diols (b2) présentent un poids moléculaire de 60 à 500 g/mole,
b3) de monomères différents des monomères (b1) et (b2) avec au moins un radical isocyanate ou au moins un radical réactif aux radicaux isocyanate qui portent par ailleurs au moins un radical hydrophile ou un radical potentiellement hydrophile, par lequel la dispersibilité dans l'eau des polyuréthannes est assurée,
b4) éventuellement d'autres composés multivalents différents des polyols (b2) et des monomères (b3) avec des radicaux réactifs par rapport aux isocyanates, pour lesquels il s'agit de radicaux hydroxyle alcooliques ou de radicaux amino primaires ou secondaires,
et le polyuréthanne (PUR.Ic) étant constitué
c1) d'isocyanates multivalents avec 4 à 30 atomes de C,
c2) de polyols dont
c2.1)10 à 100% en mole par rapport à la quantité totale des diols (c2) présentent un poids moléculaire de 500 à 5000, et
c2.2)0 à 90% en mole par rapport à la quantité totale des diols (c2) présentent un poids moléculaire de 60 à 500 g/mole,
c3) de monomères différents des monomères (c1) et (c2) avec au moins un radical isocyanate ou au moins un radical réactif aux radicaux isocyanate qui portent par ailleurs au moins un radical acryloyle ou méthacryloyle.

4. Dispersions aqueuses selon l'une des revendications 1 à 3, dans lesquelles le monomère (a4) ou (c3) est un (C₁-C₆-hydroxyalkyl)-acrylate, un (C₁-C₆-hydroxyalkyl)-méthacrylate ou le bisadduit d'acide acrylique et/ou d'acide méthacrylique sur un bisépoxyde.

5. Dispersions aqueuses selon l'une des revendications 1 à 4, dans lesquelles la phase (P.II) contient un polyuréthanne (PUR.IId) qui porte des radicaux assurant la dispersibilité dans l'eau du polyuréthanne, un polymère (POL.IIa) préparé à partir de monomères polymérisables par voie radicalaire avec des doubles liaisons C=C selon la méthode de la polymérisation radicalaire en émulsion ou suspension, ou un polymère (POL.IId) qui porte des radicaux assurant la dispersibilité dans l'eau du polymère, préparé à partir de monomères polymérisables par voie radicalaire avec des doubles liaisons C=C selon la méthode de la polymérisation radicalaire en masse ou en solution, le polyuréthanne (PUR.IId), les polymères (POL.IIa) et (POL.IIb) portant 0,05 à 3 moles de radicaux amino primaires, de radicaux amino secondaires ou de radicaux thiol par kg.

6. Dispersions aqueuses selon l'une des revendications 1 à 5, dans lesquelles la phase (P.II) contient un mélange
- d'un polyuréthanne (PUR.IIe) qui porte des radicaux assurant la dispersibilité dans l'eau du polyuréthanne, d'un polymère (POL.IIc) préparé à partir de monomères polymérisables par voie radicalaire avec des doubles liaisons C=C selon la méthode de la polymérisation radicalaire en émulsion ou suspension ou d'un polymère (POL.IId) qui porte des radicaux assurant la dispersibilité dans l'eau du polymère, préparé à partir de monomères polymérisables par voie radicalaire avec des doubles liaisons C=C selon la méthode de la polymérisation radicalaire en masse ou en solution, le polyuréthanne (PUR.IIe) ou les polymères (POL.IIc) ou (POL.IId) portant moins de 0,05 mole de radicaux amino primaires, de radicaux amino secondaires ou de radicaux thiol par kg, et
- d'un composé (V.II) qui porte au moins deux radicaux sélectionnés dans le groupe des radicaux thiol, des radicaux amino primaires ou des radicaux amino secondaires et présente une solubilité dans l'eau de moins de 1 g/l et un poids moléculaire de moins de 10000.

7. Dispersions aqueuses selon l'une des revendications 1 à 6, dans lesquelles le composé (V.II) est :
- une polyamine araliphatique en C₆ à C₃₀ ou aliphatique en C₄ à C₃₀ ou
- un ester composé d'un alcool C₂-C₁₀-alkylique multivalent et d'un acide C₂-C₁₀-thiomonocarboxylique.

8. Dispersions aqueuses selon la revendication 7, dans lesquelles le composé (V.II) est un tétrakis-3-mercaptopropionate de pentaérythritol.

9. Dispersions aqueuses de polyuréthanne à réticulation latente selon l'une des revendications 1 à 8, dans lesquelles les radicaux avec une double liaison C=C sont des radicaux dans lesquels la double liaison est activée par un radical carbonyle lié directement à celle-ci.

10. Utilisation des dispersions selon l'une des revendications 1 à 9 comme agent d'enduction ou adhésif.

11. Objets en bois, en métal, en textile, en cuir ou en plastique, qui sont collés, imprégnés ou enduits avec une dispersion aqueuse selon l'une des revendications 5 à 8.
